# EUROPEAN PATENT SPECIFICATION

(11) **EP 1 849 037 B1**
(45) Date of publication and mention of the grant of the patent: **13.01.2010**
(21) Application number: 06709611.5
(22) Date of filing: 02.02.2006
(51) Int. Cl.: G02F 1/015, G02F 1/017, G02F 1/025

(54) **OPTICAL MODULATOR**
OPTISCHER MODULATOR
MODULATEUR OPTIQUE

(30) Priority: 02.02.2005 GB 0502108
(43) Date of publication of application: 31.10.2007
(73) Proprietor: The Centre for Integrated Photonics Limited, Ipswich IP5 3RE (GB)
(72) Inventor: MOODIE, David Graham, Suffolk IP13 6LA (GB)
(74) Representative: ip21 Ltd
(86) International application number: PCT/GB2006/000360
(87) International publication number: WO 2006/082411

(56) References cited:
- TSUZUKI K ET AL: "40 Gbit/s <E1>n</E1><E1>i</E1><E1>n</E1> InP MachZehnder modulator with a pi voltage of 2.2 V" ELECTRONICS LETTERS, IEE STEVENAGE, GB, vol. 39, no. 20, 2 October 2003 (2003-10-02), pages 1464-1466, XP006021009 ISSN: 0013-5194
- PATENT ABSTRACTS OF JAPAN vol. 2003, no. 12, 5 December 2003 (2003-12-05) -& JP 2004 139122 A (NIPPON TELEGR & TELEPH CORP <NTT>), 13 May 2004 (2004-05-13)
- PATENT ABSTRACTS OF JAPAN vol. 1998, no. 13, 30 November 1998 (1998-11-30) -& JP 10 206808 A (OKI ELECTRIC IND CO LTD), 7 August 1998 (1998-08-07)
- GAARDER A ET AL: "Ultrafast carrier trapping and recombination in high resistivity ion implanted InP" 2003 INTERNATIONAL CONFERENCE INDIUM PHOSPHIDE AND RELATED MATERIALS. CONFERENCE PROCEEDINGS. (IPRM). SANTA BARBARA, CA, MAY 12 - 16, 2003, INTERNATIONAL CONFERENCE ON INDIUM PHOSPHIDE AND RELATED MATERIALS, NEW YORK, NY : IEEE, US, 12 May 2003 (2003-05-12), pages 441-444, XP010746465 ISBN: 0-7803-7704-4

## Description

### Field of the Invention

This invention relates to semiconductor optoelectronic components and in particular to electroabsorption modulators.

### Background to the Invention

High-speed optical modulators are already widely used at 2.5 Gbit/s and 10 Gbit/s for telecommunications applications and may be used in the future at higher bit-rates, such as 40 Gbit/s. There may also be future demand for different types of higher bandwidth components in mm-wave and sub mm-wave (THz) systems across a broad range of applications.

Electroabsorption modulators (EAMs) typically have a far smaller optical path length through the modulating material than alternative optical modulators and so are the most promising for ultra-fast applications. EAMs typically are fabricated using reverse biased PiN semiconductor junctions. Advanced travelling wave structures based on EAMs on semi-insulating substrates are starting to be developed, see for example R. Lewen et al, "Segmented transmission line electroabsorption modulators," IEEE JLT, vol. 22, no. 1, pp. 172-178, 2004.

In general there are several materials-related limitations to higher speed and higher optical output power operation of EAMs that remain to be addressed. These include the series resistance of the chip acting to strongly damp high frequency signals, saturation of the modulation efficiency at high optical powers due to increased carrier densities and photocurrents and thermal runaway and device failure at high optical powers due to the high photocurrents generated.

According to A. Marceaux et al ("High-speed 1.55um Fe-doped multiple quantum well saturable absorber on InP" Appl. Phys. Lett., vol. 78, no. 26, pp. 4065-4067, June 2001), incorporation of Fe within InGaAs/InP MQWs (multiple quantum wells) did not significantly broaden the exciton peak and reduced the recovery time of excitonic absorption bleaching from 7ns to 7ps. Furthermore, NPiPN electroabsorption modulators have been reported, in which the p doping was used to reduce the leakage current, see for example Devaux, F. et al, "Proposal and demonstration of a symmetrical npipn electroabsorption modulator" IEEE Photonics Technology Letters, Volume: 7 , Issue: 7, Pages:748-750, July 1995.

Fe doping can be used to achieve semi-insulating InP layers, see S. D. Perrin et al, "Planarised InP regrowths around tall and narrow mesas using Chloride-MOVPE", Presented at Indium Phosphide and Related Materials Conference, Davos, Switzerland, May 16 - 20, 1999, Paper No. 015. N-Fe doped InP- i N 10 Gbit/s Mach-Zehnder modulators have been reported recently offering reduced optical loss and electrical signal loss (K. Tsuzuki et al, "10-Gbit/s, 100km SMF transmission using an InP-based n-i-n Mach-Zehnder modulator with a driving voltage of 1.0 Vpp," OFC 2004, PDP-14). These used Fe doping in the InP layer above an undoped core layer whose refractive index was modified by the electric field.

Tsuzuki K. et al. : "40 Gbit/s n-i-n; InP Mach-Zehnder modulator with a pi voltage of 2.2 V" ELECTRONICS LETTERS, IEE STEVENAGE, GB, vol. 39, no. 20, 2 October 2003 (2003-10-02), pages 1464-1466, and JP2004139122 disclose optical modulators having an active layer (specifically an intrinsic Multi-Quantum-Well, MQW) sandwiched between two n-doped (n-InP) layers of semiconductor.

This invention, at least in its preferred embodiments, is expected to improve performance in the existing applications and enable future opportunities by offering higher optical output powers as well as higher bit-rate or frequency operation. Reduced thermal dissipation is another advantage which may improve performance of integrated devices.

### Summary of the Invention

Accordingly, this invention provides an electroabsorption modulator comprising an absorption layer between two layers of n-doped semiconductor, wherein the absorption layer is doped or implanted with ions making it semi-insulating.

In some embodiments, intermediate layers of p-type semiconductor may be located between the absorption layer and each layer of n-type semiconductor.

In general, the absorption layer is Fe-doped, although other deep level acceptor dopants may be used. For example, the absorption layer may be doped with other transition metals.

The dopant concentration in the absorption layer may be greater than 2 x 10¹⁶ cm⁻³, in particular greater than 2 x 10¹⁷ cm⁻³. In most embodiments, the dopant concentration is no greater than 2 x 10¹⁸ cm⁻³.

Viewed from a broad aspect, this invention provides an electroabsorption modulator in which the layer or layers whose absorption coefficient can be modulated by an electric field is doped or implanted with ions making it semi-insulating.

Viewed from another broad aspect, this invention provides an electroabsorption modulator in which the layer or layers whose absorption coefficient can be modulated by an electric field is doped or implanted with ions acting as efficient recombination sites for photogenerated electrons and holes. The layer may be doped or implanted with ions that make it semi-insulating.

Viewed from yet another broad aspect, this invention provides an electroabsorption modulator with Fe-doping within the layer or layers whose absorption coefficient can be modulated by an electric field.

Viewed from a further broad aspect, this invention provides an electroabsorption modulator wherein instead of a PiN junction the device comprises one or more NPi(semi-insulating)PN or preferably Ni(semi-insulating)N structures.

This invention also extends to a semiconductor photoconductive emitter, photodiode or transducer in which the optically absorbing region is doped or implanted with ions making it semi-insulating. The invention further extends to a semiconductor Mach-Zehnder modulator in which the core layer (whose refractive index can be modulated by an electric field) is doped or implanted with ions making it semi-insulating. In general, the invention extends to a photonic integrated device comprising one or more of the devices described herein.

The device may be fabricated upon a semi-insulating InP substrate. The device may use a travelling wave electrode structure.

This invention also extends to use of a device in accordance with any aspect of the invention to emit or detect radiation in the frequency range 80 GHz to 2 THz

### Brief Description of the Drawings

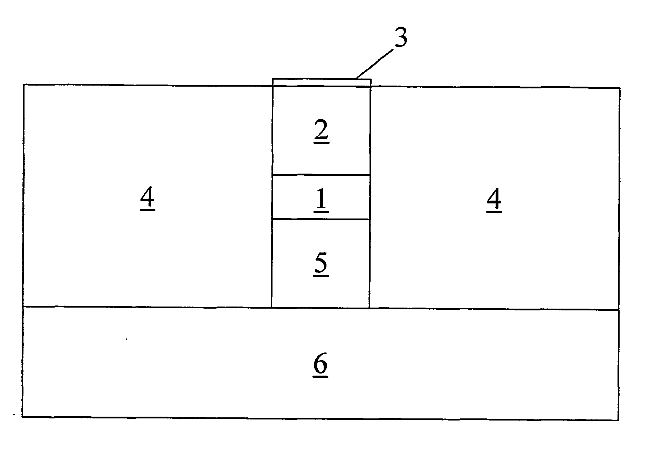

An embodiment of the invention will now be described by way of example only and with reference to the accompanying drawings, in which the Figure is a schematic cross section in a plane perpendicular to the direction of optical propagation through an electroabsorption modulator structure according to an embodiment of the invention.

### Detailed Description of an Embodiment

A new structure of high-speed EAM (electroabsorption modulator) is proposed with different material compositions in the absorber and upper contact region to overcome at least some of the limitations of the prior art. Instead of a PiN junction, as is typically used in known devices. A device according to the invention comprises NPi(Fe)PN or preferably Ni(Fe-doped)N structures. Other deep level acceptor dopants or implanted ions likely to give semi-insulating performance could be used instead of or as well as Fe.

The dominant term in the chip serial resistance is that associated with the p-contact layer; nInP has ∼5% of the resistivity of pInP for the same doping levels. Incorporating Fe into the depletion region reduces the leakage current of the otherwise leaky NiN junction.

Fe in the depletion region will act as a non-radiative recombination site to reduce the photo-generated carrier lifetime, thus reducing optical saturation effects. Fe in the depletion region will reduce the responsivity (= photocurrent / optical input power) of the EAM, permitting higher input optical powers before thermal runaway occurs.

A schematic cross-section of a device according to a preferred embodiment of the invention is shown in the Figure. Layer 1 is called the 'absorption layer' and has a higher refractive index than the surrounding layers and thus can be used to guide light along the device. It may be composed of either bulk semiconductor or, preferably, a multiple quantum well, preferably with InGaAs wells and InAlAs barriers. Layer 1 may be doped with a deep level acceptor such as Fe to a concentration of around 8 x 10¹⁷ cm⁻³.

Layers 2 and 5 are n-doped layers of semiconductor material, preferably InP. An intermediate bandgap layer may optionally be inserted between these layers and layer 1. Layer 3 is a metallic contact layer and layer 4 is a current blocking region, which can be composed of semi-insulating material such as Fe-doped InP or a dielectric material depending on whether the device is a buried heterostructure or ridge waveguide, respectively. Layer 6 is n-doped semiconductor which may be located upon either an n-doped or semi-insulating substrate (not shown) depending on whether the other metallic contact (not shown) is located on the underside or top of the chip respectively.

In summary, an electroabsorption modulator comprises an absorption layer 1 between two layers of n-doped semiconductor 2, 5. The absorption layer 1 is doped or implanted with Fe ions making it semi-insulating. The use of an NiN structure rather than a PiN structure significantly reduces the series resistance of the device. The Fe-doping of the absorption layer reduces the leakage current of the NiN structure and provides recombination sites for photo-generated electron-hole pairs.

## Claims

1. An electroabsorption modulator comprising an absorption layer (1) between two layers of n-doped semiconductor (2, 5),
**characterized in that** the absorption layer is doped or implanted with ions making it semi-insulating.

2. An electroabsorption modulator as claimed in claim 1, wherein intermediate layers of p-type semiconductor are located between the absorption layer and each layer of n-doped semiconductor.

3. An electroabsorption modulator as claimed in claim 1 or 2, wherein the absorption layer is Fe-doped.

## Patentansprüche

1. Elektroabsorptionsmodulator, der eine Absorptionsschicht (1) zwischen zwei Schichten aus n-dotierten Halbleitern (2, 5) umfasst, **dadurch gekennzeichnet, dass** die Absorptionsschicht mit Ionen dotiert oder implantiert ist, wodurch sie halbisolierend wird.

2. Elektroabsorptionsmodulator nach Anspruch 1, wobei Zwischenschichten aus P-Typ-Halbleitern zwischen der Absorptionsschicht und jeder Schicht aus n-dotierten Halbleitern angeordnet sind.

3. Elektroabsorptionsmodulator nach Anspruch 1 oder 2, wobei die Absorptionsschicht Fe-dotiert ist.

## Revendications

1. Un modulateur à électroabsorption comprenant une couche d'absorption (1) entre deux couches de semiconducteur à dopage n (2, 5), **caractérisé en ce que** la couche d'absorption est dopée ou implantée avec des ions la rendant semi-isolante.

2. Un modulateur à électroabsorption selon la Revendication 1, où des couches intermédiaires de semiconducteur de type p sont placées entre la couche d'absorption et chaque couche de semiconducteur à dopage n.

3. Un modulateur à électroabsorption selon la Revendication 1 ou 2, où la couche d'absorption est dopée au Fe.
